# EUROPEAN PATENT SPECIFICATION

(11) **EP 2 831 626 B1**
(45) Date of publication and mention of the grant of the patent: **11.01.2023**
(21) Application number: 12872429.1
(22) Date of filing: 29.03.2012
(51) Int. Cl.: G01S 19/42, G01S 19/46, G01S 19/25, G01S 19/26

(54) **METHOD AND APPARATUS FOR DETERMINING A POSITION OF A GNSS RECEIVER**
VERFAHREN UND VORRICHTUNG ZUR BESTIMMUNG DER POSITION EINES GNSS-EMPFÄNGERS
PROCÉDÉ ET APPAREIL POUR DÉTERMINER UNE POSITION D'UN RÉCEPTEUR GNSS

(43) Date of publication of application: 04.02.2015
(73) Proprietor: RX NETWORKS INC., Vancouver, BC V7X 1L3 (CA)
(72) Inventor: YOUSSEF, Mohamed, Vancouver, British Columbia V6E 2V2 (CA); IZADPANAH, Ashkan, Vancouver, British Columbia V6E 2V2 (CA); AFZAL, Muhammad Haris, Vancouver, British Columbia V6E 2V2 (CA); AMINIAN, Behnam, Vancouver, British Columbia V6E 2V2 (CA)
(74) Representative: Zimmermann, Tankred Klaus
(86) International application number: PCT/CA2012/000293
(87) International publication number: WO 2013/142946

(56) References cited:
- WO-A1-2009/149417
- WO-A1-2011/124959
- WO-A1-2012/055026
- US-A1- 2007 233 383
- US-B1- 6 417 801

## Description

### TECHNICAL FIELD

The present application relates to a method and apparatus for acquiring satellites in a Global Navigation Satellite System (GNSS) and fixing a position of a GNSS receiver.

### BACKGROUND DISCUSSION

A Global Navigation Satellite System (GNSS) receiver requires information from at least four GNSS satellites in order to determine its three dimensional position. The approximate distance between a GNSS satellite and a receiver is generally referred to as a pseudorange. The location of the GNSS satellites relative to the receiver has a major impact on the overall accuracy of the determined three dimensional position. In general, good satellite geometry occurs when satellites are evenly scattered relative to the receiver. When less than four GNSS satellites are acquired or in a case of bad satellite geometry, a stand-alone GNSS receiver may fail to fix its three-dimensional position. Difficulty in acquiring satellites is typically due to signal degradation and unavailability of satellites in challenging environments such as indoors, in densely forested areas or in deep urban locations, for example, where attenuation and multipath effects make it difficult for the GNSS receiver to discriminate and acquire information from the required number of GNSS satellites.

Other non-GNSS positioning techniques use several technologies such as WiFi and Cellular-based positioning, for example, which can provide a source of additional information to assist a stand-alone GNSS receiver when it cannot acquire a sufficient number of GNSS satellites or in the case of bad satellite geometry. Cooperation between a GNSS receiver and any other positioning technology is referred to as Assisted-GNSS (A-GNSS). The assistance information generally includes ephemeris data (real or synthetic), timing data and/or position estimation.

A well known GNSS is the Global Positioning System (GPS). In conventional Assisted-GPS (A-GPS) where initial position assistance is available, the initial position assistance may be used as an aid by the receiver to allow the receiver to focus on signals from satellites passing overhead. More generally, however, the initial position assistance just provides a fallback position in case the GPS receiver still fails to acquire information from a sufficient number of satellites or in case of bad satellite geometry. Such methods have been described as hybrid positioning and generally involve an either/or selection between the outputs of two or more positioning technologies including GPS, A-GPS, WiFi and Cellular-based positioning, for example.

WO2009149417 discloses a method of integrating a WLAN-based positioning system (WLAN-PS) and a satellite-based positioning system (SPS) to create a hybrid positioning system.

U.S. Patent No. 6417801 discloses a method and apparatus for computing GPS receiver position without using absolute time information transmitted by the satellite or by an alternative source of timing available at the GPS receiver. The GPS receiver performs code phase ambiguity resolution using a rough position estimate, such as the position of a radio base station.

### SUMMARY

The invention is set out in the appended claims.

### BRIEF DESCRIPTION OF THE DRAWINGS

Embodiments of the present application will now be described, by way of example only, with reference to the attached Figures, wherein:
Figure 1 is a schematic diagram of some components of a mobile device including a GPS receiver in communication with GPS satellites;
Figure 2 is a block diagram of components of the mobile device of Figure 1 ;
Figure 3 is a block diagram of a GPS receiver in communication with GPS satellites and a non-GNSS positioning application;
Figure 4 is a block diagram depicting operation of a GPS receiver according to an embodiment;
Figure 5 is a flow diagram depicting processing of correlation peaks;
Figure 6 is a flow diagram depicting operation of a satellite acquisition application;
Figure 7 is a schematic diagram showing possible positions of a GPS receiver as determined using the satellite acquisition application;
Figure 8 is a flow diagram depicting a method of determining a position of a GPS receiver using assisted positioning information from a non-GNSS positioning application;
Figure 9A is a schematic diagram showing two possible positions of a GPS receiver when information from two GPS satellites is received;
Figure 9B is a schematic diagram showing possible positions of a GPS receiver determined using the method of Figure 8;
Figure 9C is a schematic diagram showing possible positions of a GPS receiver as determined using a hybrid positioning system of the prior art;
Figure 10 is a schematic diagram depicting operating of a GPS receiver using a satellite acquisition application and a position determining application according to an embodiment;
Figure 11 is a schematic diagram showing possible positions of a GPS receiver using a satellite acquisition application and a position determining application according to an embodiment; and
Figure 12 is a flowchart depicting collaboration between the GPS receiver, satellite acquisition application, position determining application and position assisted-GPS application.

### DETAILED DESCRIPTION

It will be appreciated that for simplicity and clarity of illustration, where considered appropriate, reference numerals may be repeated among the figures to indicate corresponding or analogous elements. In addition, numerous specific details are set forth in order to provide a thorough understanding of the embodiments described herein. However, it will be understood by those of ordinary skill in the art that the embodiments described herein may be practiced without these specific details. In other instances, well-known methods, procedures and components have not been described in detail so as not to obscure the embodiments described herein. Also, the description is not to be considered as limiting the scope of the embodiments described herein.

It will be appreciated by a person skilled in the art that GPS is referred to throughout the present application by way of example only. The methods and apparatus of the present application are applicable to any GNSS.

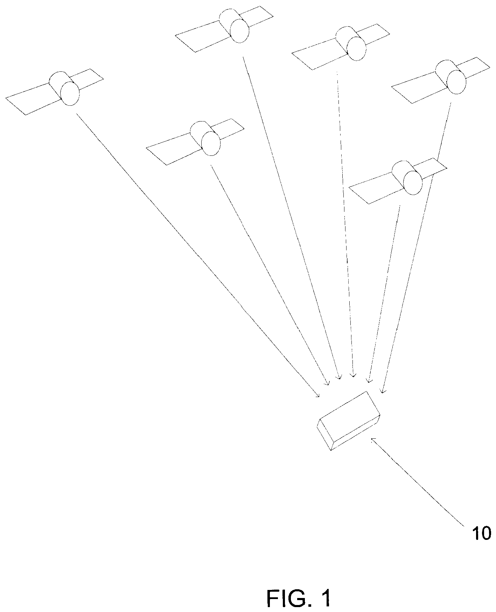

Referring to Figure 1, a mobile device 10 receives information from GPS satellites in order to determine its position. The mobile device 10 may be a cell phone, a personal digital assistant, a Smartphone, an asset tracking device, a tablet or laptop computer, a navigation device or another device that is capable of determining its position with the help of a non-GNSS positioning application. In the embodiments described herein, assisted position information derived from a non-GNSS positioning application includes at least initial, or coarse, position assistance, which helps the GPS receiver 14 locate the GPS satellites passing overhead more quickly than a stand-alone GPS receiver, for example. The assisted position information derived from a non-GNSS positioning application may be available locally, on the mobile device 10, may be available through direct communication with a computer or may be available via wireless communication with a server or database.

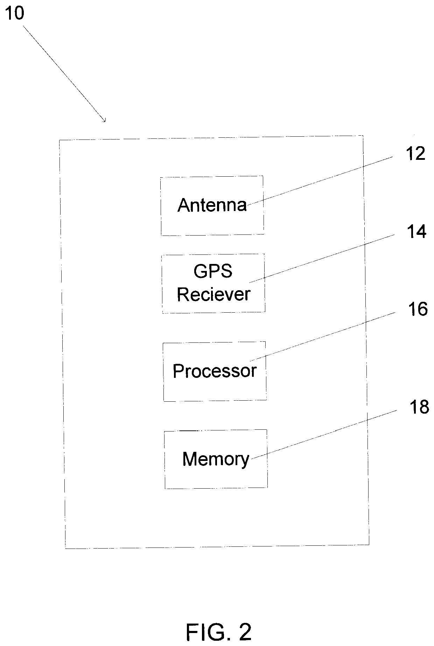

As shown in Figure 2, the mobile device 10 includes an antenna 12 for receiving wireless signals, a GPS receiver 14 in communication with the antenna 12, a processor 16 in communication with the antenna 12 and the receiver 14. The mobile device 10 further includes a memory 18 that communicates with the processor 16. The mobile device 10 may communicate with a computer to receive an estimated location area from a non-GNSS positioning application via a cellular data network, such as GPRS, EDGE, 3G, 4G, WLAN, 762.11 g, or 762.11n, for example. The mobile device 10 may further be capable of short range communication using Bluetooth^{™}, for example. In one embodiment, the mobile device 10 includes an antenna 12 and some GPS receiver components. For example, the GPS receiver 14 may include a front end and a digitizer only. In this embodiment, other GPS receiver components, the processor 16 and the memory 18 may be hosted remotely on a server, for example.

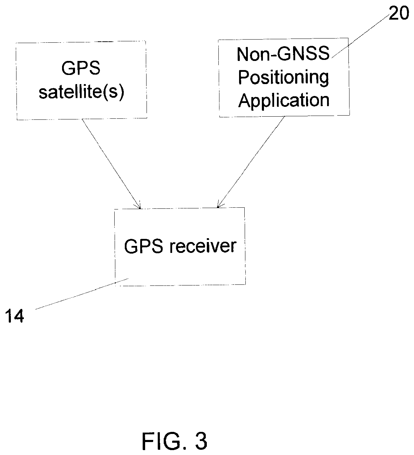

As shown in Figure 3, the GPS receiver 14 is capable of receiving signals from GPS satellites and communicating with a non-GNSS positioning software application 20. The non-GNSS positioning software application 20 may be stored as computer readable code in memory 18 of the mobile device 10 or, alternatively, stored on a server remote from the mobile device 10. The non-GNSS positioning application 20 may be any positioning application capable of providing a coarse position estimate. Example of non-GNSS positioning applications include: WiFi-based positioning, cellular-based positioning (including but not limited to mobile standards such as GSM, CDMA, UMTS, LTE), land-mobile radio systems (including but not limited to VHF systems used in private or public safety applications), radio-broadcast positioning (including, but not limited position based on radio broadcast transmission towers such as FM or TV stations), or other data network infrastructure based positioning (including but not limited to IP routers, data modems or Internet protocols such as GeoIP).

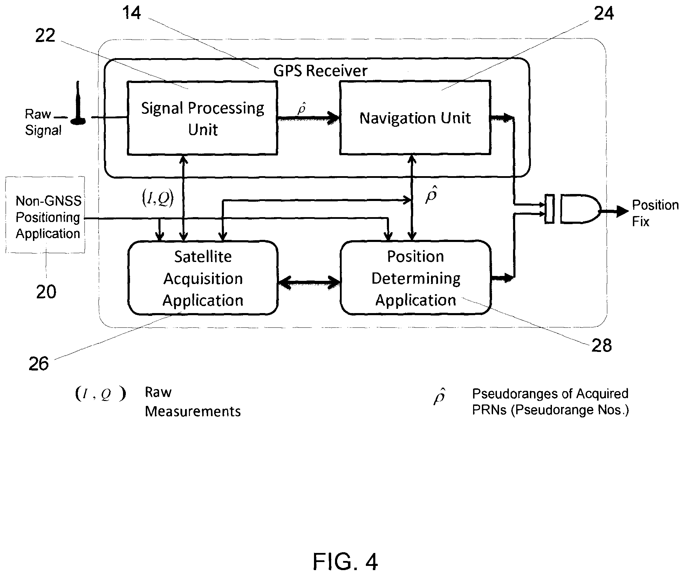

Referring also to Figure 4, the GPS receiver 14 includes a signal processing unit 22, which acquires satellites, and a navigation unit 24, which fixes the position of the GPS receiver 14. As shown, the GPS receiver 14 communicates with a satellite acquisition application 26 and a position determining application 28. The satellite acquisition application 26 and the position determining application 28 are software applications that are stored as computer readable code in memory 18 and are executable by the processor 16. In general, the satellite acquisition application 26 identifies "true" or "best" pseudoranges when multiple candidate pseudoranges are determined in order to acquire more GPS satellites and the position determining application 28 reduces positioning uncertainty when satellite availability is limited. The GPS receiver 14 of Figure 4 is capable of fixing its position when four or fewer satellites are acquired by the signal processing unit 22.

Referring still to Figure 4, the signal processing unit of the GPS receiver 14 receives satellite signals from available GPS satellites and sends pre-processed digitized satellite signals (*I*,*Q*) to the satellite acquisition application 26. The signal processing unit 22 determines and sends pseudoranges of acquired satellites to the navigation unit 24, which in turn sends the pseudoranges of acquired satellites to the position determining application 28. The estimated location area from the non-GNSS positioning application 20 is received by both the satellite acquisition application 26 and the position determining application 28 in order to fix a position of the GPS receiver 14. In one embodiment, the satellite signals and the estimated location area are received at generally the same time.

The satellite acquisition application 26 uses the estimated location area from the non-GNSS positioning application 20 to discriminate between multiple candidate peaks in order to determine which one is the "true" or "best" correlation peak. When the GPS receiver correlates the pre-processed satellite signal with its locally generated replicas, the GPS receiver: i) may not find any candidate correlation peaks in the signal, ii) may find multiple candidate correlation peaks due to signal attenuation or multipath, or iii) may find one distinct candidate correlation peak. When one distinct candidate correlation peak is identified, a pseudorange associated with that candidate correlation peak is determined by the GPS receiver 14 to be an acquired satellite.

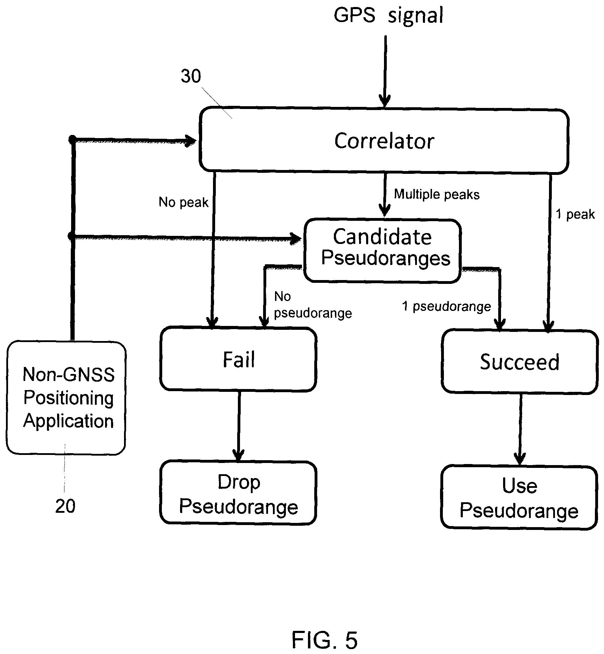

Referring to Figure 5, correlation peaks are output from a correlator 30, or matched filter, which is part of the signal processing unit 22, of the GPS receiver 14. The inputs of the correlator 30 are the GPS pre-processed signals and its replicas locally generated in the GPS receiver 14. The correlator 30 may be referred to a grid of correlators because the correlator 30 includes a predefined search space. In prior art (assisted) GPS receivers, no satellite may be acquired unless a distinct correlation peak is found.

In general, correlators 30 use the estimated location area from the non-GNSS positioning application 20 to define a correlation search space, accelerate a search and reduce an area of uncertainty in order to extract a distinct correlation peak. When a distinct correlation peak is not found, multiple candidate correlation peaks are considered by the satellite acquisition application 26. When multiple candidate correlation peaks are identified for a particular GPS satellite, candidate pseudoranges that correspond to the multiple candidate correlation peaks are calculated. The estimated location area from the non-GNSS positioning application 20 is used in combination with pseudoranges of GPS satellites that have been acquired (i.e. satellites for which a distinct correlation peak was found) to select the "true" or "best" pseudorange out of the candidate pseudoranges when a "true" or "best" pseudorange exists.

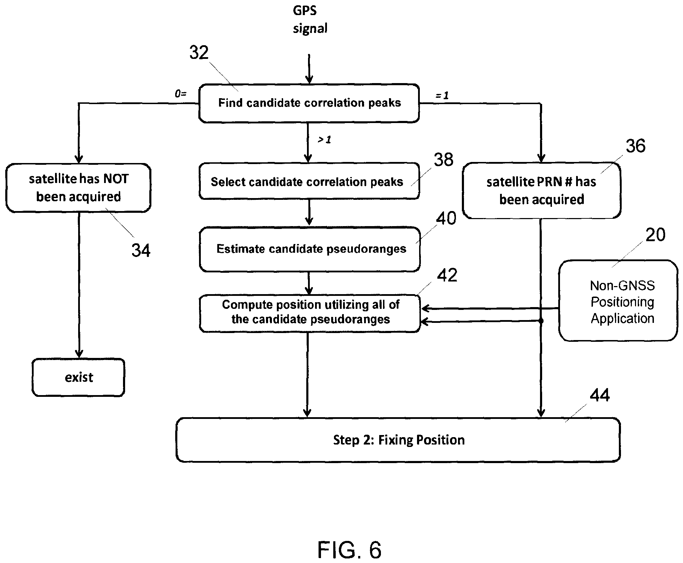

Referring to Figure 6, the satellite acquisition application 26 identifies candidate correlation peaks in the signal at 32. When no candidate correlation peaks are found, no GPS satellite may be acquired at 34. When one distinct correlation peak is found, then the GPS satellite is acquired at 36. When more than one candidate correlation peak is found, candidate correlation peaks are selected, at 38, and candidate pseudoranges are determined at 40. All of the candidate pseudoranges, which includes the pseudoranges of GPS satellites that have been acquired, and the estimated location area from the non-GNSS positioning application 20 are used at 42 to: estimate the receiver's position using an estimator, which is part of the satellite acquisition application 26, detect incorrect pseudoranges out of the candidate pseudoranges and then re-estimate the receiver's position with the best pseudorange using the estimator. A statistical analysis is used for identifying the best pseudorange among the candidates. The statistical analysis relies on the estimator's misclosure vector, which identifies the error between the candidate pseudoranges and those estimated by the estimator, and a priori knowledge of the quality of the pseudoranges, which is a function of received signal strength and satellite elevation and provides the initial standard deviation of the pseudoranges. Based on the a priori knowledge of the quality of pseudoranges and the misclosure vector, a statistical distribution is obtained. Candidate pseudoranges that do not fall into the statistical distribution are rejected, leaving behind the best pseudorange. At 44, the position of the GPS receiver may be fixed using the navigation unit 24 or the position determining application 28.

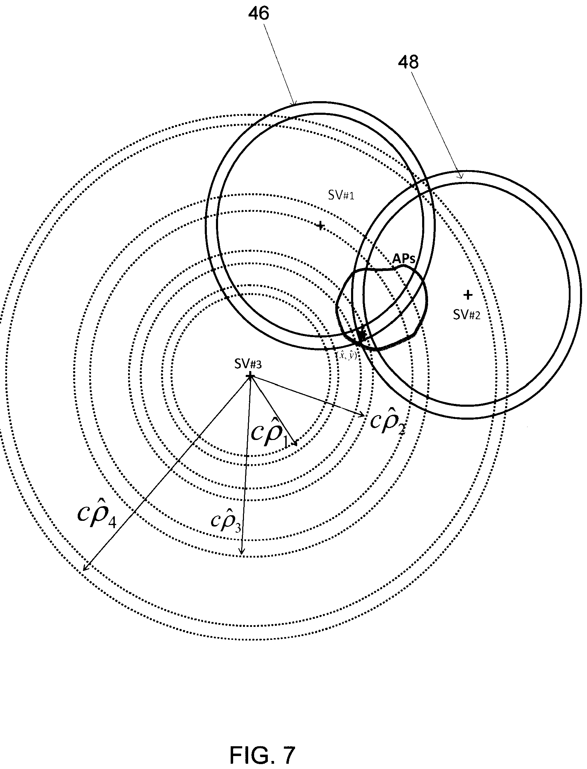

Referring to Figure 7, in one example, four candidate correlation peaks of a satellite vehicle (SV) are found and four candidate pseudoranges (*cρ̂*₁,*cρ̂*₂,*cρ̂*₃ and *cρ̂*₄) are calculated based on the candidate correlation peaks. The estimator then uses all of the candidate pseudoranges, which includes the pseudoranges of GPS satellites that have been acquired, identified by reference numerals 46 and 48, and the estimated location area from the non-GNSS positioning application 20 to estimate the receiver's position. The estimated position will be biased because of the presence of incorrect pseudoranges. Statistical analysis is then performed using the a priori knowledge of the pseudoranges and the misclosure vector to identify the "true" or "best" pseudorange. Then the estimator uses the best pseudorange and the estimated location area from the non-GNSS positioning application 20 to estimate the receiver's final position, which is the unbiased and best estimate. As shown in Figure 7, the candidate pseudorange *cρ̂₂* is identified as the best pseudorange. Thus, a third GPS satellite is considered to be acquired with a true pseudorange value, *ρ̂*_{*SV*_{#3}} equal to *cρ̂*₂*.* As shown, the final two-dimensional position fix is estimated from the acquired GPS satellites and the position uncertainty of the estimated location area from the non-GNSS positioning application.

In general, the satellite acquisition application 26 increases the number of acquired GPS satellites and hence, improves overall satellite availability and satellite geometry. The satellite acquisition application 26 has the ability to accept multiple candidate correlation peaks, perform calculations therewith, and then use the estimated location area from the non-GNSS positioning application 20 to recommend the "true" or "best" correlation peak.

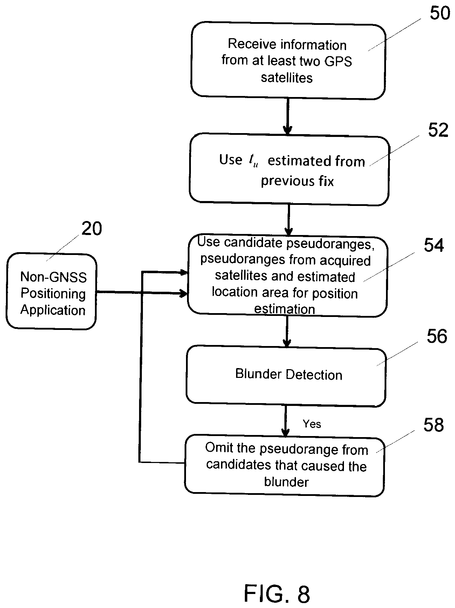

Referring back to Figure 4, the position determining application 28 uses different methods to find a fix for the position of the GPS receiver 14 depending on the number of GPS satellites that are available. Referring also to Figure 8, when information from three GPS satellites is received, the position of the GPS receiver 14 is solved using the estimated location area from the non-GNSS positioning application 20, receiver clock bias (*tᵤ*) and all of the pseudoranges, which may include distinct as well as candidate pseudoranges. For example, two distinct correlation peaks of two satellites and multiple candidate correlation peaks of the third satellite may be included.

Referring to Figure 8, at 50, information from at least two satellites is received and pseudoranges are computed either by one or both of the signal processing unit 22 and the satellite acquisition application 26. At 52, the receiver clock bias (*tᵤ*) is estimated from the GPS receiver's previous position fix. The position determining application 28 then computes the possible GPS receiver positions using candidate pseudoranges, which may include pseudoranges of acquired GPS satellites, the estimated location area from the non-GNSS positioning application 20 and the receiver clock bias (*tᵤ*) at 54. The statistical outputs of the position determining application 28, such as the misclosure vector, are then used for detecting the incorrect pseudoranges using the statistical analysis at 56, which may be referred to as a blunder detection method. The blunder detection method generally uses the difference between estimated pseudoranges determined at 54 and the candidate pseudoranges corresponding to the non-acquired satellites determined at 50. Candidate pseudoranges causing statistical blunders are identified by the blunder detection method at 56 and, at 58, the candidate pseudoranges causing statistical blunders are removed leaving the best pseudorange, which is then used for position estimation, at 54, in a subsequent iteration. When no blunders are detected at 56, the method ends at 56.

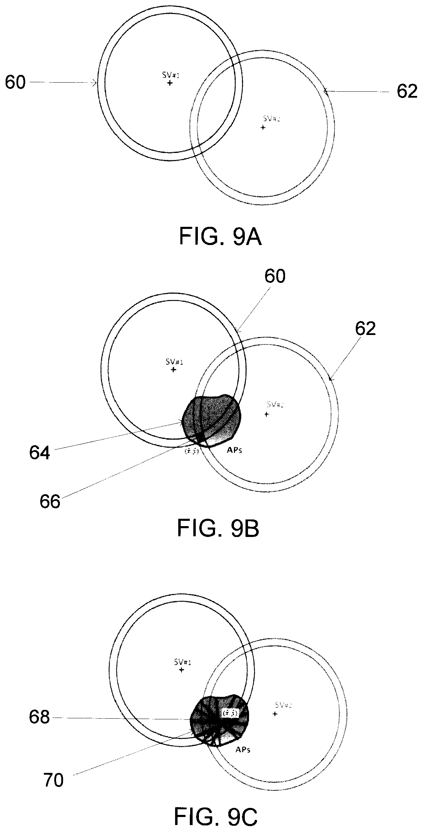

In one example, when information from two GPS satellites 60, 62 is received as shown in Figure 9A, the GPS receiver 14 is unable to estimate its position and hence executes the method of determining a location of a GPS receiver 14 of Figure 8. At 50, the GPS receiver 14 receives information from two GPS satellites. In this example, two distinct correlation peaks are determined so that a single pseudorange corresponding to each GPS satellite is determined. At 52, the receiver clock bias (*tᵤ*) is estimated from the GPS receiver's previous position fix. The estimator of the position determining application 28 then computes the possible GPS receiver positions using the pseudoranges of the GPS satellites that have been acquired, the estimated location area from the non-GNSS positioning application 20 and the receiver clock bias (*tᵤ*) at 54. At 56, the estimator's misclosure vector and a priori knowledge of the quality of the pseudoranges are used by the blunder detection method to identify incorrect candidate pseudoranges. Since no candidate pseudoranges were initially determined, no blunders are detected and the receiver position estimation ends at 56.

As shown in Figure 9B, the estimated position 64 derived from the non-GNSS positioning application 20 using, for example, Access Points (APs), is used by the estimator to estimate the receiver's position. An AP is a wireless router or device that is used to access data networks. An AP may be WLAN router, 762.11g, 762.11b or a cellular base station (i.e. GPRS, EDGE, 3G, 4G). As shown, the final position 66 estimates for the GPS receiver 14 are based on acquired GPS satellite information, 60 and 62, as well as the estimated location area 64 from the non-GNSS positioning application, (i.e. two-dimensional position variance).

Figure 9C schematically depicts how a hybrid positioning system of the prior art determines a position of a GPS receiver. In this scenario, the hybrid positioning engine relies more on an estimated location area 70 from the non-GNSS positioning application. This may occur when the pseudoranges have greater uncertainty (ie. large standard deviation) when compared to the estimated location area 70 from the non-GNSS positioning application. The final position fix 68 is represented by (*x̂*, *ŷ*), while the shaded area around the fixed position represents the positioning uncertainty retrieved from the estimated location area 78 from the non-GNSS positioning application.

An advantage to the method of determining a location of a GPS receiver 14 is that the final position, as well as the position uncertainty, is based on information from the acquired GPS satellites as well as the estimated location area from the non-GNSS positioning application. As such, the final position fix, and its uncertainty, is more accurate and reliable than prior art hybrid and non-GNSS positioning applications where more weight was given to the location area from the non-GNSS positioning application.

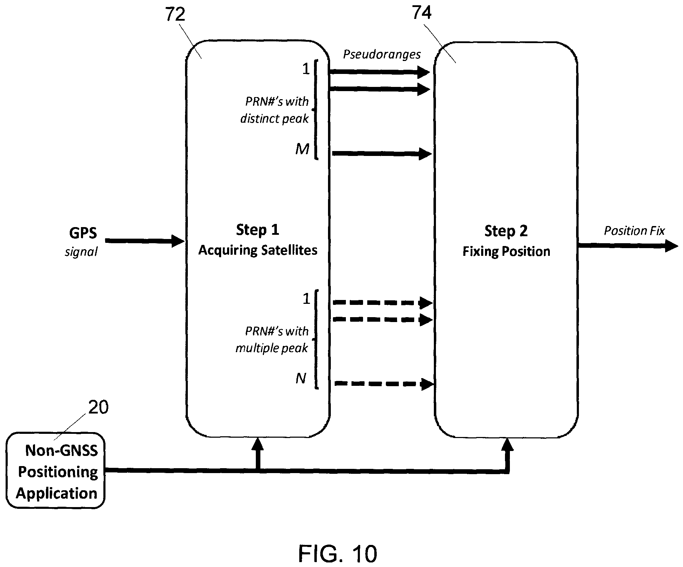

The GPS receiver 14 may operate using the satellite acquisition application 26, the position determining application 28 or both the satellite acquisition application 26 and the position determining application 28. Referring to Figure 10, the GPS receiver 14 uses the satellite acquisition application 26 to acquire satellites, at 72, and the position determining application 28 to fix a position of the GPS receiver 14, at 74. Using the satellite acquisition application 26, two different sets of pseudoranges are determined. The first set of pseudoranges, [1,...,*M*], are derived from acquired GPS satellites each with a distinct correlation peak. The second set of pseudoranges, [1,...,*N*], are candidate pseudoranges derived from multiple candidate correlation peaks for each GPS satellite pseudorange. The satellite acquisition application 26 determines the "true" or "best" pseudorange for the respective GPS satellites based on blunder detection and the non-GNSS positioning application. When the "true" or "best" pseudoranges have been determined, the satellite pseudoranges are considered to be acquired and are then used in the position determining application 28 of Figure 4.

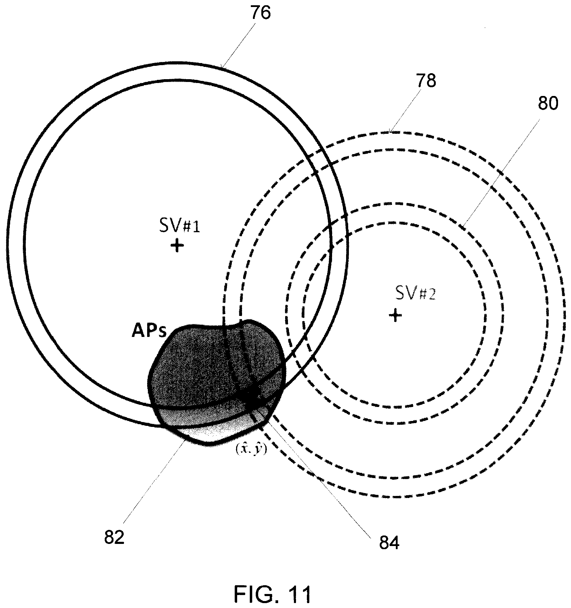

Referring to Figure 11, another example of a GPS receiver 14 that uses both the satellite acquisition application 26 and the position determining application 28 to acquire satellites and fix a position of the GPS receiver 14 is shown. In this example, one GPS satellite has been acquired by a stand-alone GPS receiver, as indicated by reference numeral 76, and the stand-alone GPS receiver fails to fix its position. In order to acquire a second GPS satellite, two candidate correlation peaks, which were found by the correlator 32, are used to calculate two candidate pseudoranges, which are indicated by reference numerals 78 and 80. The three candidate pseudoranges, which includes the pseudorange of the acquired GPS satellite, along with the estimated location area 82 from a non-GNSS positioning application are used by the estimator to estimate the receiver's position. The blunder detection method then identifies the best pseudorange, which is used by the estimator to fix the position 84 of the GPS receiver 14.

In one embodiment, a GPS receiver 14 is capable of switching between operating as: i) a standalone GPS receiver, which receives signals from four GPS satellites, ii) an assisted-GPS receiver, which uses GNSS orbital data or estimated location areas from a non-GNSS positioning application to allow the GPS receiver to locate GPS satellites in range more quickly, iii) a GPS receiver operable when satellite availability is limited and iv) a GPS receiver 14 operable when more than one correlation peak is determined.

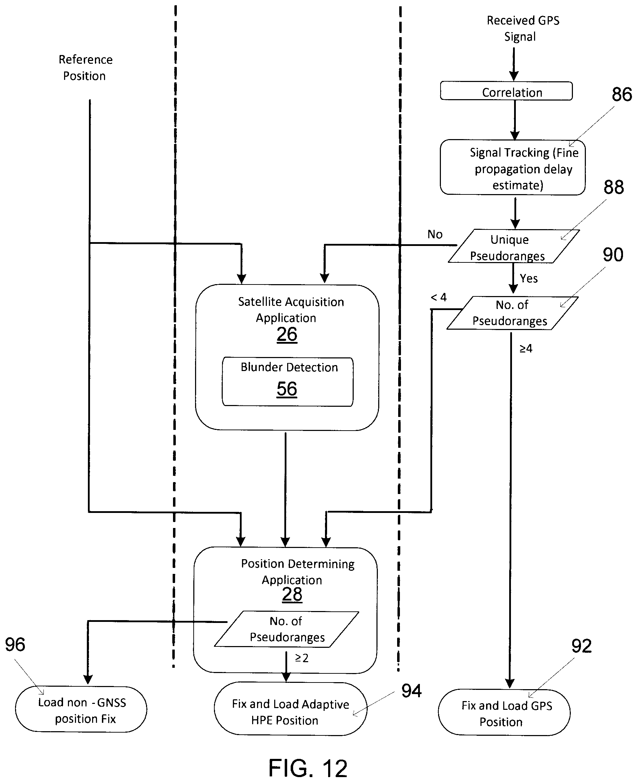

Figure 12 depicts an example of collaboration between the GPS receiver 14, the satellite acquisition application 26, the position determining application 28 and the non-GNSS positioning application 20. The satellite acquisition application 26 and the position determining application 28 of the mobile device 10 may collaborate with other related satellite acquisition applications 26 and position determining applications 28, operating on the same or different mobile devices. In general, GPS receivers in different devices may collaborate when the GPS receivers are within an acceptable range of one another based on non-GNSS positioning.

The signal processing unit 22 of the GPS receiver 14 performs correlation and identifies the number of candidate correlation peaks. As shown, the signal processing unit 22 uses a signal tracking application 86 to convert the candidate correlation peaks to pseudoranges by estimating the propagation delay. At 88, when all of the pseudoranges are identified as unique and the total number of pseudoranges is determined, at 90, to be at least four then GPS position is fixed, at 92, without using the location area estimate from the non-GNSS positioning application 20. At 88, when the pseudoranges are not unique due to multiple candidate correlation peaks, the satellite acquisition application 26 is used for identifying the best pseudorange using the blunder detection method 56. After blunder detection, the position determining application 28 is used to estimate the receiver's position, which includes checking for at least two pseudoranges and either i) estimating the receiver's position using all of the pseudoranges as well as the location area estimate from the non-GNSS positioning application, as indicated at 94, or, ii) reporting the non-GNSS position as a fall back, as indicated at 96.

The methods and apparatus of the present embodiments facilitate fixing of a three-dimensional position of a GNSS receiver, such as a GPS receiver, when the number of acquired satellites is less than four or the satellite geometry is far from optimal. By integrating GNSS and non-GNSS positioning systems, rather than using a non-GNSS positioning system as a fallback, greater accuracy in position determination may be achieved. The methods and apparatus described herein provide 1) improved discrimination between possible pseudoranges so that more GPS satellites may be acquired as compared to stand-alone modes and 2) a reduction in the area of positioning uncertainty.

The above-described embodiments are intended to be examples only. Alterations, modifications and variations can be effected to the particular embodiments by those of skill in the art without departing from the scope of the present application, which is defined solely by the claims appended hereto.

## Claims

1. A method of determining a position of a GNSS receiver (14) comprising:
receiving, at the GNSS receiver (14), satellite signals from at least two GNSS satellites;
receiving, at a processor (16) in communication with the GNSS receiver, an estimated location area from a non-GNSS positioning application (20);
utilizing the estimated location area to define a correlation search space;
performing, by the GNSS receiver, correlations of the satellite signals from the at least two GNSS satellites with locally generated replicas ;
identifying, by the processor (16), candidate correlation peaks; and, in response to identifying by the processor (16) a single candidate correlation peak corresponding to a first one of the at least two GNSS satellites and multiple candidate correlation peaks corresponding to a second one of the at least two GNSS satellites, wherein the multiple candidate correlation peaks are identified due to signal attenuation or multipath:
acquiring the first one of the at least two GNSS satellites, and determining a first pseudorange corresponding to the first one of the at least two GNSS satellites;
determining, by the processor (16), multiple candidate pseudoranges corresponding to the multiple candidate correlation peaks of the second one of the at least two GNSS satellites;
determining, by the processor (16), possible GNSS receiver positions utilizing the first pseudorange and the multiple candidate pseudoranges, the estimated location area from the non-GNSS positioning application and a receiver clock bias estimated from a previous position fix of the GNSS receiver;
utilizing blunder detection, by the processor (16), to identify candidate pseudoranges causing statistical blunders from the multiple candidate pseudoranges corresponding to the second one of the at least two GNSS satellites, and removing the candidate pseudoranges causing statistical blunders, leaving a best pseudorange;
utilizing the first pseudorange, the best pseudorange and the estimated location area to determine, by the processor (16), the position of the GNSS receiver (14).

2. A method as claimed in claim 1, wherein the blunder detection includes statistical analysis based on a priori knowledge of a quality of the multiple candidate pseudoranges and a misclosure vector to identify a best one of the multiple candidates pseudoranges.

3. A method as claimed in claim 2, wherein the a priori knowledge of the quality of the multiple candidate pseudoranges is based on received signal strength and satellite elevation for the second one of the at least two GNSS satellites.

4. A method as claimed in claim 1, wherein the satellite signals from the at least two GNSS satellites and the estimated location area from the non-GNSS positioning application are received at generally the same time.

5. A method as claimed in claim 1, wherein the non-GNSS positioning application (20) is based on one of: WiFi, Cellular, land-mobile radio, radio broadcast and GeolP.

6. A method as claimed in claim 1, comprising receiving GNSS satellite information from a GNSS receiver of another mobile device.

7. A computer readable digital storage medium having stored thereon a computer program having a program code which, when running on a processor and a GNSS receiver in communication with the processor, causes the processor and GNSS receiver to carry out the method of claim 1.

8. A mobile device (10) comprising:
a GNSS receiver (14),
an antenna (12), in communication with the GNSS receiver (14), for receiving satellite signals from at least two GNSS satellites; and
a processor (16) in communication with the GNSS receiver (14); the processor (16) configured to receive an estimated location area from a non-GNSS positioning application (20),
wherein the GNSS receiver:
defines a correlation search space utilizing the estimated location area, and
performs correlations of the satellite signals from the at least two GNSS satellites with locally generated replicas,
wherein the processor identifies candidate correlation peaks and, in response to identifying, by the processor (16), a single candidate correlation peak corresponding to a first one of the at least two GNSS satellites and multiple candidate correlation peaks corresponding to a second one of the at least two GNSS satellites, wherein the multiple candidate correlation peaks are identified due to signal attenuation or multipath, the processor is configured to:
acquire the first one of the at least two GNSS satellites, and determine a first pseudorange corresponding to the first one of the at least two GNSS satellites;
determine multiple candidate pseudoranges corresponding to the multiple candidate correlation peaks of the second one of the at least two GNSS satellites;
determine possible GNSS receiver positions utilizing the first pseudorange and the multiple candidate pseudoranges, the estimated location area from the non-GNSS positioning application and a receiver clock bias estimated from a previous position fix of the GNSS receiver;
utilizing blunder detection to identify candidate pseudoranges causing statistical blunders from the multiple candidate pseudoranges corresponding to the second one of the at least two GNSS satellites, and removing the candidate pseudoranges causing statistical blunders, leaving a best pseudorange;
utilize the first pseudorange, the best pseudorange and the estimated location area to determine the position of the GNSS receiver (14).

9. A mobile device as claimed in claim 8, wherein the processor receives GNSS satellite information from a GNSS receiver of another mobile device.

## Patentansprüche

1. Ein Verfahren zum Bestimmen einer Position eines GNSS-Empfängers (14), das folgende Schritte aufweist:
Empfangen von Satellitensignalen von zumindest zwei GNSS-Satelliten an dem GNSS-Empfänger (14);
Empfangen eines geschätzten Positionsbereichs von einer Nicht-GNSS-Positionierungsanwendung (20) an einem Prozessor (16) in Kommunikation mit dem GNSS-Empfänger;
Verwenden des geschätzten Positionsbereichs, um einen Korrelationssuchraum zu definieren;
Durchführen von Korrelationen der Satellitensignale von den zumindest zwei GNSS-Satelliten mit lokal erzeugten Kopien durch den GNSS-Empfänger;
Identifizieren von Kandidatenkorrelationsspitzen durch den Prozessor (16); und ansprechend auf das Identifizieren einer einzelnen Kandidatenkorrelationsspitze, die einem ersten der zumindest zwei GNSS-Satelliten entspricht, und mehrerer Kandidatenkorrelationsspitzen, die einem zweiten der zumindest zwei GNSS-Satelliten entsprechen, durch den Prozessor (16), wobei die mehreren Kandidatenkorrelationsspitzen aufgrund von Signaldämpfung oder Mehrwegen identifiziert werden:
Erfassen des ersten der zumindest zwei GNSS-Satelliten und Bestimmen eines ersten Pseudobereichs, der dem ersten der zumindest zwei GNSS-Satelliten entspricht;
Bestimmen, durch den Prozessor (16), von mehreren Kandidatenpseudobereichen, die den mehreren Kandidatenkorrelationsspitzen des zweiten der zumindest zwei GNSS-Satelliten entsprechen;
Bestimmen, durch den Prozessor (16), von möglichen GNSS-Empfängerpositionen, die den ersten Pseudobereich und die mehreren Kandidatenpseudobereiche, den geschätzten Positionsbereich von der Nicht-GNSS-Positionierungsanwendung und eine Empfängertaktvorspannung verwenden, die von einer vorhergehenden Positionsfixierung des GNSS-Empfängers geschätzt wird;
Verwenden von Fehlererfassung durch den Prozessor (16), um Kandidatenpseudobereiche, die statistische Fehler verursachen, von den mehreren Kandidatenpseudobereichen zu identifizieren, die dem zweiten der zumindest zwei GNSS-Satelliten entsprechen, und
Entfernen der Kandidatenpseudobereiche, die statistische Fehler verursachen, so dass ein bester Pseudobereich übrigbleibt;
Verwenden des ersten Pseudobereichs, des besten Pseudobereichs und des geschätzten Positionsbereichs durch den Prozessor (16), um die Position des GNSS-Empfängers (14) zu bestimmen.

2. Ein Verfahren gemäß Anspruch 1, bei dem die Fehlererfassung statistische Analyse umfasst, basierend auf einer a priori-Kenntnis einer Qualität der mehreren Kandidatenpseudobereiche und eines Abschlussfehlervektors, um einen besten der mehreren Kandidatenpseudobereiche zu identifizieren.

3. Ein Verfahren gemäß Anspruch 2, bei dem die a priori-Kenntnis der Qualität der mehreren Kandidatenpseudobereiche auf der empfangenen Signalstärke und Satellitenelevation für den zweiten der zumindest zwei GNSS-Satelliten basiert.

4. Ein Verfahren gemäß Anspruch 1, bei dem die Satellitensignale der zumindest zwei GNSS-Satelliten und der geschätzte Positionsbereich von der Nicht-GNSS-Positionierungsanwendung im Allgemeinen zur gleichen Zeit empfangen werden.

5. Ein Verfahren gemäß Anspruch 1, bei dem die Nicht-GNSS-Positionierungsanwendung (20) auf einem der folgenden basiert:
WiFi, Mobilfunk, mobiler Landfunk, Rundfunk und GeoIP.

6. Ein Verfahren gemäß Anspruch 1, das das Empfangen von GNSS-Satelliteninformationen von einem GNSS-Empfänger eines anderen Mobilgeräts aufweist.

7. Ein computerlesbares digitales Speichermedium, auf dem ein Computerprogramm gespeichert ist, das einen Programmcode aufweist, der, wenn dasselbe auf einem Prozessor und einem GNSS-Empfänger in Kommunikation mit dem Prozessor läuft, bewirkt, dass der Prozessor und der GNSS-Empfänger das Verfahren gemäß Anspruch 1 ausführen.

8. Ein Mobilgerät (10), das folgende Merkmale aufweist:
einen GNSS-Empfänger (14),
eine Antenne (12) in Kommunikation mit dem GNSS-Empfänger (14) zum Empfangen von Satellitensignalen von zumindest zwei GNSS-Satelliten; und
einen Prozessor (16) in Kommunikation mit dem GNSS-Empfänger (14); wobei der Prozessor (16) konfiguriert ist, einen geschätzten Positionsbereich von einer Nicht-GNSS-Positionierungsanwendung (20) zu empfangen,
wobei der GNSS-Empfänger:
unter Verwendung des geschätzten Positionsbereichs einen Korrelationssuchraum definiert, und
Korrelationen der Satellitensignale von den zumindest zwei GNSS-Satelliten mit lokal erzeugten Kopien durchführt,
wobei der Prozessor Kandidatenkorrelationsspitzen identifiziert und ansprechend auf das Identifizieren einer einzelnen Kandidatenkorrelationsspitze, die einem ersten der zumindest zwei GNSS-Satelliten entspricht, und mehrerer Kandidatenkorrelationsspitzen, die einem zweiten der zumindest zwei GNSS-Satelliten entsprechen, durch den Prozessor (16,) wobei die mehrere Kandidatenkorrelationsspitzen aufgrund einer Signaldämpfung oder Mehrwegen identifiziert werden, wobei der Prozessor konfiguriert ist zum:
Erfassen des ersten der zumindest zwei GNSS-Satelliten und Bestimmen eines ersten Pseudobereichs, der dem ersten der zumindest zwei GNSS-Satelliten entspricht;
Bestimmen von mehreren Kandidatenpseudobereichen, die den mehreren Kandidatenkorrelationsspitzen des zweiten der zumindest zwei GNSS-Satelliten entsprechen;
Bestimmen von möglichen GNSS-Empfängerpositionen, die den ersten Pseudobereich und die mehreren Kandidatenpseudobereiche, den geschätzten Positionsbereich von der Nicht-GNSS-Positionierungsanwendung und eine Empfängertaktvorspannung verwenden, die von einer vorhergehenden Positionsfixierung des GNSS-Empfängers geschätzt wird;
Verwenden von Fehlererfassung, um Kandidatenpseudobereiche, die statistische Fehler verursachen, von den mehreren Kandidatenpseudobereichen zu identifizieren, die dem zweiten der zumindest zwei GNSS-Satelliten entsprechen, und
Entfernen der Kandidatenpseudobereiche, die statistische Fehler verursachen, so dass ein bester Pseudobereich übrigbleibt;
Verwenden des ersten Pseudobereichs, des besten Pseudobereichs und des geschätzten Positionsbereichs, um die Position des GNSS-Empfängers (14) zu bestimmen.

9. Ein Mobilgerät gemäß Anspruch 8, bei dem der Prozessor GNSS-Satelliteninformationen von einem GNSS-Empfänger eines anderen Mobilgeräts empfängt.

## Revendications

1. Procédé pour déterminer une position d'un récepteur GNSS (14), comprenant le fait de:
recevoir, au niveau du récepteur GNSS (14), des signaux de satellite d'au moins deux satellites GNSS;
recevoir, au niveau d'un processeur (16) en communication avec le récepteur GNSS, une zone de localisation estimée à partir d'une application de positionnement non GNSS (20);
utiliser la zone de localisation estimée pour définir un espace de recherche de corrélation;
effectuer, par le récepteur GNSS, des corrélations des signaux de satellite des au moins deux satellites GNSS avec des répliques générées localement;
identifier, par le processeur (16), des crêtes de corrélation candidates; et, en réponse à l'identification par le processeur (16), une crête de corrélation candidate unique correspondant à un premier des au moins deux satellites GNSS et de multiples crêtes de corrélation candidates correspondant au deuxième des au moins deux satellites GNSS, où les multiples crêtes de corrélation candidates sont identifiées du fait de l'atténuation de signal ou des trajets multiples;
acquérir le premier des au moins deux satellites GNSS, et déterminer une première pseudo-plage correspondant au premier des au moins deux satellites GNSS;
déterminer, par le processeur (16), de multiples pseudo-plages candidates correspondant aux multiples crêtes de corrélation candidates du deuxième des au moins deux satellites GNSS;
déterminer, par le processeur (16), de possibles positions de récepteur GNSS à l'aide de la première pseudo-plage et des multiples pseudo-plages candidates, de la zone de localisation estimée à partir de l'application de positionnement non GNSS et d'une polarisation d'horloge de récepteur estimée à partir d'une acquisition de position précédente du récepteur GNSS;
utiliser la détection de bévues, par le processeur (16), pour identifier les pseudo-plages candidates provoquant des bévues statistiques à partir des multiples pseudo-plages candidates correspondant au deuxième des au moins deux satellites GNSS, et
éliminer les pseudo-plages candidates provoquant des bévues statistiques, laissant une meilleure pseudo-plage;
utiliser la première pseudo-plage, la meilleure pseudo-plage et la zone de localisation estimée pour déterminer, par le processeur (16), la position du récepteur GNSS (14).

2. Procédé selon la revendication 1, dans lequel la détection de bévues comporte une analyse statistique basée sur une connaissance a priori d'une qualité des multiples pseudo-plages candidates et d'un vecteur d'erreur de fermeture pour identifier la meilleure des multiples pseudo-plages candidates.

3. Procédé selon la revendication 2, dans lequel la connaissance a priori de la qualité des multiples pseudo-plages candidates est basée sur l'intensité du signal reçu et l'élévation du satellite pour le deuxième des au moins deux satellites GNSS.

4. Procédé selon la revendication 1, dans lequel les signaux de satellite des au moins deux satellites GNSS et la zone de localisation estimée à partir de l'application de positionnement non GNSS sont reçus généralement en même temps.

5. Procédé selon la revendication 1, dans lequel l'application de positionnement non GNSS (20) est basée sur l'un parmi: WiFi, Cellulaire, radio mobile terrestre, diffusion radio et GeolP.

6. Procédé selon la revendication 1, comprenant le fait de recevoir des informations de satellite GNSS à partir d'un récepteur GNSS d'un autre dispositif mobile.

7. Support de mémoire numérique lisible par ordinateur présentant, y mémorisé, un programme d'ordinateur présentant un code de programme qui, lorsqu'il est exécuté sur un processeur et un récepteur GNSS en communication avec le processeur, amène le processeur et le récepteur GNSS à réaliser le procédé selon la revendication 1.

8. Appareil mobile (10), comprenant:
un récepteur GNSS (14),
une antenne (12), en communication avec le récepteur GNSS (14), destinée à recevoir les signaux de satellite d'au moins deux satellites GNSS; et
un processeur (16) en communication avec le récepteur GNSS (14); le processeur (16) étant configuré pour recevoir une zone de localisation estimée à partir d'une application de positionnement non GNSS (20),
dans lequel le récepteur GNSS:
définit un espace de recherche de corrélation à l'aide de la zone de localisation estimée, et
effectue des corrélations des signaux de satellite des au moins deux satellites GNSS avec des répliques générées localement,
dans lequel le processeur identifie les crêtes de corrélation candidates et, en réponse à l'identification, par le processeur (16), une crête de corrélation candidate unique correspondant à un premier des au moins deux satellites GNSS et de multiples crêtes de corrélation candidates correspondant à un deuxième des au moins deux satellites GNSS, dans lequel les multiples crêtes de corrélation candidates sont identifiées du fait de l'atténuation du signal ou des trajets multiples, le processeur est configuré pour:
acquérir le premier des au moins deux satellites GNSS, et déterminer une première pseudo-plage correspondant au premier des au moins deux satellites GNSS;
déterminer de multiples pseudo-plages candidates correspondant aux multiples crêtes de corrélation candidates du deuxième des au moins deux satellites GNSS;
déterminer les positions possibles du récepteur GNSS à l'aide de la première pseudo-plage et des multiples pseudo-plages candidates, de la zone de localisation estimée à partir de l'application de positionnement non GNSS et d'une polarisation d'horloge de récepteur estimée à partir d'une acquisition de position précédente du récepteur GNSS;
utiliser la détection de bévues pour identifier les pseudo-plages candidates provoquant des bévues statistiques à partir des multiples pseudo-plages candidates correspondant au deuxième des au moins deux satellites GNSS, et éliminer les pseudo-plages candidates provoquant des bévues statistiques, laissant une meilleure pseudo-plage;
utiliser la première pseudo-plage, la meilleure pseudo-plage et la zone de localisation estimée pour déterminer la position du récepteur GNSS (14).

9. Dispositif mobile selon la revendication 8,
dans lequel le processeur reçoit des informations de satellite GNSS d'un récepteur GNSS d'un autre dispositif mobile.
